# EUROPÄISCHE PATENTANMELDUNG

(11) **EP 1 002 966 A1**
(43) Veröffentlichungstag der Anmeldung: **24.05.2000**
(21) Anmeldenummer: 98122019.7
(22) Anmeldetag: 20.11.1998
(51) Int. Cl.: F16D 3/70

(54) **Elastische Wellenkupplung**

(71) Anmelder: Stromag AG, 59425 Unna (DE)
(72) Erfinder: Dorok, Günter, 59174 Kamen (DE); Mehlan, Andreas Dr., 59425 Unna (DE)
(74) Vertreter: Wilhelm & Dauster Patentanwälte European Patent Attorneys

(57) **Zusammenfassung**

Eine elastische Wellenkupplung mit zwei Kupplungsteilen (2,3), wobei in Ausnehmungen (13) des Kupplungsteiles (2) elastisch deformierbare, einstückige Kupplungsglieder (6) formschlüssig gehalten sind, die mit jeweils einer Aufnahme versehen sind, in die jeweils eine korrespondierende Klaue (7) des anderen Kupplungsteiles (3) axial eintaucht, wobei die Kupplungsglieder wenigstens auf einer Seite der jeweiligen Aufnahme für die korrespondierende Klaue wenigstens einen Hohlraum aufweisen.

Erfindungsgemäß sind die elastisch deformierbaren Kupplungsglieder (6) unter Belassung jeweils eines axialen Freiraumes (8,9) im Bereich ihrer gegenüberliegenden Stirnseiten in der jeweils zugeordneten Ausnehmung (13) des Kupplungsteiles (2) positioniert, und es sind sowohl jede Ausnehmung (13) als auch jede Klaue (7) auf der jeweiligen Stirnseite mit jeweils einer den axialen Freiraum (8,9) begrenzenden Stützschulter (10,11) versehen, die die Klaue (7) oder die Ausnehmung (13) berührungslos wenigstens teilweise axial überlagert.

## Beschreibung

Die Erfindung betrifft eine elastische Wellenkupplung mit zwei Kupplungsteilen, wobei in Ausnehmungen des einen Kupplungsteiles elastisch deformierbare, einstückige Kupplungsglieder formschlüssig gehalten sind, die mit jeweils einer Aufnahme versehen sind, in die jeweils eine korrespondierende Klaue des anderen Kupplungsteiles - in Umfangsrichtung spielfrei - axial eintaucht, wobei die Kupplungsglieder - in Umfangsrichtung gesehen - wenigstens auf einer Seite der jeweiligen Aufnahme für die korrespondierende Klaue wenigstens einen Hohlraum aufweisen.

Eine solche elastische Wellenkupplung ist aus der DE 197 05 873 A1 bekannt. Die bekannte Wellenkupplung weist zwei Kupplungsteile aus Metall auf, von denen einer mit einem Außenflansch und der andere mit einer Kupplungsnabe versehen ist. In dem den Außenflansch aufweisenden Kupplungsteil sind über den Umfang verteilt mehrere Ausnehmungen vorgesehen, in denen als Gummihohlkörper gestaltete elastische Kupplungsglieder formschlüssig aufgenommen sind. Die Ausnehmungen sind zu einer axialen Seite hin offen, wodurch die Kupplungsglieder axial in diese einsetzbar sind. Jedes Kupplungsglied weist eine zentrale Aufnahme sowie - in Umfangsrichtung gesehen - mehrere seitliche Hohlräume auf. Der andere Kupplungsteil ist mit formstabilen Klauen versehen, die axial in die zentralen Aufnahmen der elastischen Kupplungsglieder eintauchen. Bei einer Verdrehung der beiden Kupplungsteile relativ zueinander üben die Klauen auf die jeweiligen Kupplungsglieder Belastungen in Drehrichtung auf, wodurch die in Drehrichtung vorne liegenden Hohlräume komprimiert und die rückseitigen Hohlräume jedes Kupplungsgliedes gestreckt werden.

Aufgabe der Erfindung ist es, eine Wellenkupplung der eingangs genannten Art zu schaffen, die im praktischen Einsatz eine sichere und zuverlässige Funktion gewährleistet.

Diese Aufgabe wird dadurch gelöst, daß die elastisch deformierbaren Kupplungsglieder unter Belassung jeweils eines axialen Freiraumes im Bereich ihrer gegenüberliegenden Stirnseiten in der jeweils zugeordneten Ausnehmung des Kupplungsteiles positioniert sind, und daß sowohl jede Ausnehmung als auch jede Klaue auf der jeweiligen Stirnseite mit jeweils einer den axialen Freiraum begrenzenden Stützschulter versehen sind, die die Klaue oder die Ausnehmung berührungslos wenigstens teilweise axial überlagert. Der Erfindung lag die Erkenntnis zugrunde, daß das Elastomermaterial der Kupplungsglieder bei der aus der DE 197 05 873 A1 bekannten Wellenkupplung bei einer Verdrehung der Kupplungsteile relativ zueinander während der Kompression auch axial nach außen verdrängt wird, wodurch erhebliche Axialkräfte auf die Kupplungsteile wirkten, die eine sichere Funktion der Kupplung nicht gewährleisteten. Durch das Schaffen von axialen Freiräumen wird Raum für die axiale Verdrängung des Elastomermaterials der Kupplungsglieder geschaffen. Das zusätzliche Vorsehen der Stützschultern gewährleistet zudem, daß kein verdrängtes Elastomermaterial der Kupplungsglieder in vorhandene Spalte zwischen den Kupplungsgliedern gedrückt werden kann, wodurch zuverlässig eine Beschädigung und damit ein frühzeitiger Verschleiß der Kupplungsglieder vermieden wird. Die Stützschultern bieten Begrenzungen für die Verdrängung des Elastomermateriales der Kupplungsglieder während der jeweiligen Kompression. Durch die erfindungsgemäße Lösung wird insbesondere im praktischen Einsatz eine sichere, gleichbleibende Funktion der Wellenkupplung erzielt, die eine lange Lebensdauer gewährleistet.

In Ausgestaltung der Erfindung weist die jeweils jeder Klaue zugeordnete Stützschulter eine dem elastischen Kupplungsglied zugewandte, ebene und radial ausgerichtete Anlagefläche auf, die - in einer axialen Draufsicht auf die Klaue - die Klaue umlaufend umschließt. Die Anlagefläche gewährleistet zum einen eine sichere Begrenzung des verdrängten Elastomermateriales der Kupplungsglieder bei deren Kompression. Zum anderen gewährleistet sie trotz ihrer Stützfunktion aufgrund der radialen und ebenen Ausrichtung eine kompakte Bauweise der Wellenkupplung.

In weiterer Ausgestaltung der Erfindung ist die Stützschulter jeder Klaue derart dimensioniert, daß auch bei auf Block der Kupplungsglieder erfolgter Verdrehung der beiden Kupplungsteile zueinander die Stützschulter in Umfangsrichtung berüh-. rungslos zur korrespondierenden Ausnehmung des anderen Kupplungsteiles verbleibt. Obwohl die Stützschulter wenigstens teilweise in die jeweilige Ausnehmung des anderen Kupplungsteiles eintaucht, ist sie in ihrer Dimensionierung derart auf die jeweilige Ausnehmung abgestimmt, daß auch bei maximaler Verdrehung der Kupplungsteile zueinander kein Anschlag in Umfangsrichtung zwischen den Metallteilen, d.h. zwischen der Ausnehmung und der Stützschulter, erfolgt.

In weiterer Ausgestaltung der Erfindung ist die durch die Stützschulter jeder Klaue gebildete Anlagefläche oval gestaltet. Diese Ausgestaltung ist insbesondere bei Ausnehmungen mit entsprechend in Umfangsrichtung gerundeten Rändern vorteilhaft.

In weiterer Ausgestaltung der Erfindung sind die elastisch nachgiebigen Kupplungsglieder gleitfettbenetzt in die Ausnehmungen des Kupplungsteiles eingesetzt. Dadurch wird die Lebensdauer der aus Elastomermaterial, vorzugsweise aus Gummi, bestehenden Kupplungsglieder verlängert.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt in einem Halbschnitt eine Ausführungsform einer erfindungsgemäßen Wellenkupplung,
- Fig. 2: eine Schnittdarstellung der Wellenkupplung nach Fig. 1 entlang der Schnittlinie II-II in Fig. 1, und
- Fig. 3: eine Frontansicht des die metallischen Klauen aufweisenden Kupplungsteiles, der mit der Kupplungsnabe versehen ist.

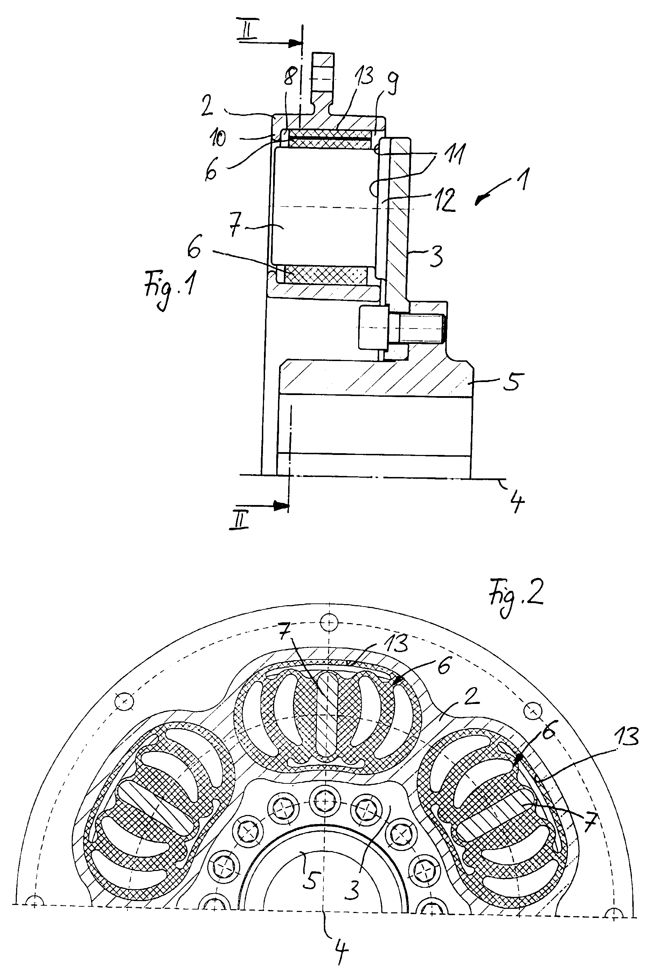

Eine elastische Wellenkupplung 1 gemäß den Fig. 1 bis 3 entspricht in ihrem Aufbau bis auf die nachfolgend beschriebenen, das Wesen der vorliegenden Erfindung ausmachenden Unterschiede einer elastischen Wellenkupplung, wie sie in der DE 197 05 873 A1 insbesondere anhand des Ausführungsbeispiels gemäß den Fig. 1 bis 3 ausführlich beschrieben ist. Bezüglich aller nachfolgend nicht näher ausgeführten Teile der Wellenkupplung 1 nach den Fig. 1 bis 3 wird somit ergänzend auf die Beschreibung in dieser DE 197 05 873 A1 verwiesen, die insoweit zur Offenbarung der vorliegenden Erfindung mit herangezogen wird.

Die Wellenkupplung gemäß den Fig. 1 bis 3 weist zwei aus Metall bestehende Kupplungsteile 2, 3 auf, die koaxial zu einer gemeinsamen Drehachse 4 angeordnet sind. Das eine Kupplungsteil 2 weist einen außenliegenden Kupplungsflansch und das andere Kupplungsteil 3 eine innenliegende Kupplungsnabe 5 auf. Zur besseren Unterscheidung wird daher nachfolgend das Kupplungsteil 2 als Flanschteil und das Kupplungsteil 3 als Nabenteil bezeichnet.

In dem Flanschteil 2 sind über seinen Umfang verteilt mehrere, vorliegend sechs, axial offene Ausnehmungen 13 vorgesehen, in die jeweils ein elastisches Kupplungsglied 6, vorliegend jeweils ein Gummihohlkörper, gemäß Fig. 2 eingebettet ist. Jedes Kupplungsglied 6 weist eine zentrale, nicht näher bezeichnete Aufnahme auf, in die eine stegartige, radial ausgerichtete und an dem Nabenteil 3 angeordnete Klaue 7 axial eintaucht. Zu beiden Seiten neben der die jeweilige Klaue 7 aufnehmenden Aufnahme jedes Kupplungsgliedes 6 weist jedes Kupplungsglied 6 jeweils mehrere, vorliegend zwei, Hohlräume auf, die in Umfangsrichtung hintereinanderliegend angeordnet sind und eine Kompression des jeweiligen Kupplungsgliedes 6 bei einer Relativverdrehung der Kupplungsteile 2, 3 zueinander bis auf Block ermöglicht. Bezüglich Aufbau und Funktion der montierten Wellenkupplung wird ebenfalls ergänzend auf die zuvor beschriebene Wellenkupplung gemäß der DE 197 05 873 A1 verwiesen.

Die Ausnehmungen 13 des Flanschteiles 2, in denen jeweils ein Kupplungsglied 6 eingebettet ist, weisen eine axiale Tiefe auf, die größer ist als die axiale Dicke des jeweiligen Kupplungsgliedes 6. Das jeweilige Kupplungsglied 6 ist derart innerhalb der jeweiligen Ausnehmung 13 positioniert, daß zu beiden Seiten axial jeweils ein Freiraum 8, 9 verbleibt. Auf der Seite des axialen Freiraumes 8 wird die Ausnehmung 13 axial durch einen zu der korrespondierenden Stirnseite des Kupplungsgliedes 6 benachbarten, umlaufenden Rand in Form einer Stützschulter 10 begrenzt, wobei diese Stützschulter 10 jedoch in radialem Abstand zur Klaue 7 endet. Die Klaue 7 weist eine axiale Länge auf, die bis in den durch die Stützschulter 10 umgrenzten Durchtritt hineinragt, so daß im Bereich der Stützschulter 10 eine axiale teilweise Überlagerung zwischen der Klaue 7 und der Stützschulter 10 erzielt wird.

Jede Klaue 7 ragt somit durch die jeweilige Ausnehmung 13 vollständig hindurch und zu einem geringen Teil noch nach außen über diese Ausnehmung 13 hinaus. Auf der gegenüberliegenden Stirnseite des Kupplungsgliedes 6 bildet die Ausnehmung 13 einen weiteren axialen Freiraum 9, der durch eine eine ebene und in einer Radialebene verlaufende Anlagefläche 11 bildende Stützschulter 12 des Nabenteiles 3 begrenzt ist.

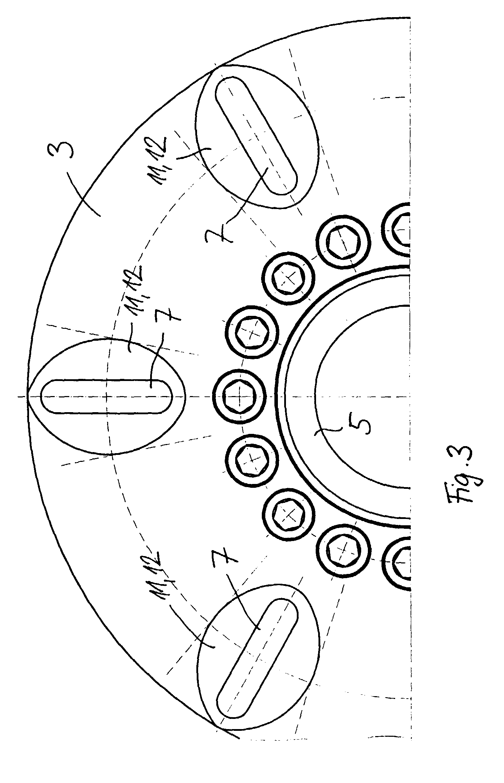

Wie anhand der Fig. 3 erkennbar ist, ist diese Stützschulter 12 als die jeweilige Klaue 7 oval umschließende Profilierung gestaltet. Diese Stützschulter 12 ragt zu einem geringen Teil, vorliegend etwa zur Hälfte ihrer axialen Dicke, in die Ausnehmung 13 und damit in den Freiraum 9 hinein, wobei der Rand jeder Stützschulter 12 mit der Wandung der Ausnehmung 13 nicht in Berührung gelangt.

Die ovale Dimensionierung der Stützschulter 12 und damit auch der ebenen Anlagefläche 11 ist derart gestaltet, daß der radial umlaufende Rand der Stützschulter 12 auch bei maximal verdrehter Kupplung nicht mit der Wandung der Ausnehmung 13 in Berührung gelangt.

Die Stützschultern 10, 12 auf beiden Seiten des jeweiligen Kupplungsgliedes 6 begrenzen den Elastomerkörper des jeweiligen Kupplungsgliedes 6 derart, daß bei einer Kompression des jeweiligen Kupplungsgliedes 6 in einer Drehrichtung kein Austritt entsprechend verdrängten Materiales in einen entsprechend verbleibenden radialen Spalt zwischen den beiden Kupplungsteilen 2, 3 erfolgen kann. Die jeweils gegenüber der DE 197 05 873 A1 erfolgte axiale Verlängerung sowohl der Klauen 7 als auch der Ausnehmungen 13 ermöglicht somit eine definierte und geführte Ausdehnung des Elastomermaterials bei einer entsprechenden Verdrängung des Kupplungsgliedes aufgrund einer Kompression, wobei die Stützschulter 10, 12 definierte Axialbegrenzungen bilden, die jedoch gleichzeitig so dimensioniert sind, daß selbst bei einer Anlage bei entsprechend verdrängten Abschnitten jedes Kupplungsgliedes 6 keine nachteilig hohen Axialkräfte auf die Kupplungsteile 2, 3 übertragen werden.

Die Kupplungsglieder 6 werden in ihrer bevorzugten Ausgestaltung als Gummihohlkörper mit einem Gleitfett, vorzugsweise in Form einer Silikon-Fettpaste, benetzt und anschließend in die Ausnehmungen 13 des Flanschteiles 2 eingesetzt.

Die zuvor beschriebene elastische Wellenkupplung ist vorzugsweise für Schiffsantriebe einsetzbar.

## Patentansprüche

1. Elastische Wellenkupplung mit zwei Kupplungsteilen, wobei in Ausnehmungen des einen Kupplungsteiles elastisch deformierbare, einstückige Kupplungsglieder formschlüssig gehalten sind, die mit jeweils einer Aufnahme versehen sind, in die jeweils eine korrespondierende Klaue des anderen Kupplungsteiles - in Umfangsrichtung spielfrei - axial eintaucht, wobei die Kupplungsglieder - in Umfangsrichtung gesehen - wenigstens auf einer Seite der jeweiligen Aufnahme für die korrespondierende Klaue wenigstens einen Hohlraum aufweisen,
**dadurch gekennzeichnet,**
daß die elastisch deformierbaren Kupplungsglieder (6) unter Belassung jeweils eines axialen Freiraumes (8, 9) im Bereich ihrer gegenüberliegenden Stirnseiten in der jeweils zugeordneten Ausnehmung (13) des Kupplungsteiles (2) positioniert sind, und daß sowohl jede Ausnehmung (13) als auch jede Klaue (7) auf der jeweiligen Stirnseite mit jeweils einer den axialen Freiraum (8, 9) begrenzenden Stützschulter (10, 12) versehen sind, die die Klaue (7) oder die Ausnehmung (13) berührungslos wenigstens teilweise axial überlagert.

2. Wellenkupplung nach Anspruch 1, dadurch gekennzeichnet, daß die jeweils jeder Klaue (7) zugeordnete Stützschulter (12) eine dem elastischen Kupplungsglied (6) zugewandte, ebene und radial ausgerichtete Anlagefläche (11) aufweist, die - in einer axialen Draufsicht auf die Klaue (7) - die Klaue (7) umlaufend umschließt.

3. Wellenkupplung nach Anspruch 1 oder 2, dadurch gekennzeichnet, daß die Stützschulter (12) jeder Klaue (7) derart dimensioniert ist, daß auch bei auf Block der Kupplungsglieder (6) erfolgter Verdrehung der beiden Kupplungsteile (2, 3) zueinander die Stützschulter (12) in Umfangsrichtung berührungslos zur korrespondierenden Ausnehmung (13) des anderen Kupplungsteiles (2) verbleibt.

4. Wellenkupplung nach Anspruch 3, dadurch gekennzeichnet, daß die durch die Stützschulter (12) jeder Klaue (7) gebildete Anlagefläche (11) oval gestaltet ist.

5. Wellenkupplung nach einem der vorhergehenden Ansprüche, dadurch gekennzeichnet, daß die elastisch nachgiebigen Kupplungsglieder (6) gleitfettbenetzt in die Ausnehmungen des Kupplungsteiles eingesetzt sind.
